(19) 

**Europäisches Patentamt**
**European Patent Office**
**Office européen des brevets**

(11) **EP 4 451 754 A1**

(12) **EUROPEAN PATENT APPLICATION**

(43) Date of publication:
**23.10.2024 Bulletin 2024/43**

(21) Application number: **24166229.5**

(22) Date of filing: **26.03.2024**

(51) International Patent Classification (IPC):
**H04W 56/00** (2009.01)

(52) Cooperative Patent Classification (CPC):
**H04W 56/0015; H04W 56/001**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.03.2023 CN 202310313708**

(71) Applicant: **Nokia Solutions and Networks Oy 02610 Espoo (FI)**

(72) Inventor: **WANG, Wen Jian Shanghai, 201206 (CN)**

(74) Representative: **DREISS Patentanwälte PartG mbB Friedrichstraße 6 70174 Stuttgart (DE)**

(54) **COMMUNICATION DEVICES, METHODS, AND APPARATUSES, AND COMPUTER-READABLE MEDIUM**

(57) Embodiments of the present disclosure relate to communication devices, methods, and apparatuses, and a computer-readable medium. The method includes: receiving a plurality of timing synchronization function (TSF) timer values from a plurality of communication devices, and transmitting control information to at least one communication device among the plurality of communication devices based on the plurality of TSF timer values, wherein the control information is for controlling an operation of the at least one communication device on at least one TSF timer value. Therefore, accurate time synchronization in a network is achieved.

200

FIG. 2

**Description**

**CROSS-REFERENCE TO RELATED APPLICATION(S)**

This application claims priority to Chinese Application No. 202310313708.1 filed in Mar. 27, 2023, the disclosures of which are incorporated herein by reference in their entities.

**FIELD**

Embodiments of the present disclosure generally relate to the field of communications, and in particular, to communication devices, methods, and apparatuses, and a computer-readable medium.

**BACKGROUND**

In mesh networks, such as a Mesh Basic Service Set (MBSS) network, Access Points (APs) that do not communicate directly with each other can transmit messages through other APs, and a mobile station (STA, which is one of the APs) can detect different APs. Among these AP nodes and STAs, clock synchronization is an important service that can be used to control and monitor MBSS activities.

**SUMMARY**

In summary, the example embodiments of the present disclosure relate to a technical solution for timing synchronization.

In a first aspect of the present disclosure, a first communication device is provided. The first communication device includes: at least one processor; and at least one memory storing instructions that, when executed by the at least one processor, cause the first communication device at least to: receive, from a plurality of communication devices, a plurality of timing synchronization function (TSF) timer values; and transmit, to at least one communication device among the plurality of communication devices and based on the plurality of TSF timer values, control information, wherein the control information is for controlling an operation of the at least one communication device on at least one TSF timer value.

In a second aspect of the present disclosure, a second communication device is provided. The second communication device includes: at least one processor; and at least one memory storing instructions that, when executed by the at least one processor, cause the second communication device at least to: receive, from a first communication device, control information, wherein the control information is for controlling an operation of the second communication device on TSF timer values; and perform, based on the control information, the operation on the TSF timer values .

In a third aspect of the present disclosure, a communication method is provided. The communication method includes: receiving, at a first communication device and from a plurality of communication devices, a plurality of TSF timer values; and transmitting, to at least one communication device among the plurality of communication devices and based on the plurality of TSF timer values, control information, wherein the control information is for controlling an operation of the at least one communication device on at least one TSF timer value.

In a fourth aspect of the present disclosure, a communication method is provided. The communication method includes: receiving, at a second communication device and from a first communication device, control information, wherein the control information is for controlling an operation of the second communication device on TSF timer values; and performing, based on the control information, the operation on the TSF timer values.

In a fifth aspect of the present disclosure, a communication apparatus is provided. The communication apparatus includes: means for receiving, at a first communication device and from a plurality of communication devices, a plurality of TSF timer values; and means for transmitting, to at least one communication device among the plurality of communication devices and based on the plurality of TSF timer values, control information, wherein the control information is for controlling an operation of the at least one communication device on at least one TSF timer value.

In a sixth aspect of the present disclosure, a communication apparatus is provided. The communication apparatus includes means for receiving, at a second communication device and from a first communication device, control information, wherein the control information is for controlling an operation of the second communication device on TSF timer values; and means for performing, based on the control information, the operation on the TSF timer values.

In a seventh aspect of the present disclosure, a non-transitory computer-readable medium is provided, including program instructions for causing an apparatus to perform at least the method according to any one of the third to fourth aspect.

In an eighth aspect of the present disclosure, a non-transitory computer-readable medium is provided, including program instructions. The program instructions perform at least the method according to any one of the third to fourth aspect.

In a ninth aspect of the present disclosure, a computer program including instructions is provided. The computer program, when executed by an apparatus, causes the apparatus to at least: receive, at a first communication device and from a plurality of communication devices, a plurality of TSF timer values; and transmit, to at least one communication device among the plurality of communication devices and based on the plurality of TSF timer values, control information, wherein the control information is for controlling an operation of the at least one communication device on at least one TSF timer value.

In a tenth aspect of the present disclosure, a computer program including instructions is provided. The computer program, when executed by an apparatus, causes the apparatus to at least: receive, at a second communication device and from a first communication device, control information, wherein the control information is for controlling an operation of the second communication device on TSF timer values; and perform, based on the control information, the operation on the TSF timer values.

In an eleventh aspect of the present disclosure, a first communication device is provided. The first communication device includes a receiving circuitry configured to receive, from a plurality of communication devices, a plurality of TSF timer values; and a transmitting circuitry configured to transmit, to at least one communication device among the plurality of communication devices and based on the plurality of TSF timer values, control information, wherein the control information is for controlling an operation of the at least one communication device on at least one TSF timer value.

In a twelfth aspect of the present disclosure, a second communication device is provided. The second communication device includes a receiving circuitry configured to receive, from a first communication device, control information, wherein the control information is for controlling an operation of the second communication device on TSF timer values; and a performing circuitry configured to perform, based on the control information, the operation on the TSF timer values .

It is to be understood that the summary section is not intended to identify key or essential features of embodiments of the present disclosure, nor is it intended to be used to limit the scope of the present disclosure. Other features of the present disclosure will become easily comprehensible through the following description.

## BRIEF DESCRIPTION OF THE DRAWINGS

FIG 1A illustrates a block diagram of an example communication system in which embodiments of the present disclosure may be implemented.

FIG 1B illustrates a schematic diagram of an example basic mesh topological structure.

FIG 1C illustrates a schematic diagram of backhaul transmission of an example mesh network.

FIG 1D illustrates a schematic diagram of time synchronization in an MBSS network according to some embodiments of the present disclosure.

FIG 2 illustrates a flowchart of an interaction between communication devices according to some embodiments of the present disclosure.

FIG 3 illustrates a schematic diagram of controlling an operation on TSF timer values in an MBSS network according to some embodiments of the present disclosure.

FIG 4 illustrates a schematic diagram of controlling an operation on TSF timer values in an MBSS network according to some other embodiments of the present disclosure.

FIG 5 illustrates a schematic diagram of controlling an operation on TSF timer values in an MBSS network according to still some further embodiments of the present disclosure.

FIG 6 illustrates a schematic diagram of a flow performed by a first communication device according to some embodiments of the present disclosure.

FIG 7 illustrates a schematic diagram of a flow performed by a second communication device according to some embodiments of the present disclosure.

FIG 8 is a simplified block diagram of an electronic device suitable for implementing the embodiments of the present disclosure.

FIG 9 illustrates a schematic diagram of a computer-readable medium suitable for implementing the embodiments of the present disclosure.

In all the accompanying drawings, identical or similar reference numerals represent identical or similar elements.

## DETAILED DESCRIPTION OF EMBODIMENTS

Principle and spirit of the present disclosure will now be described with reference to some example embodiments. It is to be understood that these embodiments are described only for the purpose of illustration and help those skilled in the art to understand and implement the present disclosure, without suggesting any limitation as to the scope of the disclosure.

The term "include" and its variants as used herein mean widespread inclusion, namely, "including but not limited to". The term "based on" should be understood as "based at least in part on". The term "one embodiment" or "the embodiment" should be understood as "at least one embodiment". The terms "first", "second", and the like may refer to different or same objects. Other explicit and implicit definitions may also be included below.

As used herein, the term "determine" encompasses a variety of actions. For example, "determine" can include operation, calculation, processing, deriving, surveying, searching (such as searching a table, a database, or another data structure), investigation, and the like. In addition, "determine" may include receiving (for example, receiving information), accessing (for example, accessing data in a memory), and the like. In addition, "determine" can include parsing, selection, picking, establishment, and the like. As used herein, "at least one of the following: <a list of two or more elements>", "at least one of <a list of two or more elements>" and similar wording, where the list of two or more elements are joined by "and" or "or", mean at least any one of these elements, or at least any two or more of these elements, or at least all of the elements.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Mesh Basic Service Set (MBSS) is an official name for Grid Cloud. MBSS stations establish point-to-point wireless links and transmit messages to each other. In some examples, a temporary network is created by a cell phone to share its Internet access with other devices. In this sense, the MBSS is closer to an Independent Basic Service Set (IBSS), rather than a standard BSS. However, an important difference between the MBSS and the IBSS is that messages between stations that do not directly communicate with each other in the MBSS can be transmitted through other stations, such as using a mesh cloud backhaul transmission. The stations in a mesh BSS may be sources (transmitting a traffic but not forwarding a traffic of any other mesh stations), sinks (receiving traffic but not transmitting or forwarding any content), or propagators (forwarding traffic coming from other stations). The MBSS had been defined by the 802.11s specification published by IEEE in 2013 and can be used for beacon products, mesh APs, and the like in some scenarios.

The MBSS network can be composed of a plurality of AP nodes. A mobile station (STA) can detect different APs, calculate Received Signal Strength Indicator (RSSI) values of the APs, dynamically select AP nodes with larger RSSI values, and re-associate the selected AP nodes with a target AP node. With the emergence of the MBSS network, it is clear that beacons require more attentions and more accurate analysis. The IEEE 802.11 standard supports infrastructures referred to as BSS and MBSS, respectively. In the BSS network, the beacons are only transmitted by the APs. In the MBSS network, beacon generation is distributed, i.e. all members of the MBSS participate in the beacon generation. The MBSS specifies a series of target beacon transmission times (TBTTs). Usually, synchronous access points may support quality of service (QoS) and efficient power saving across the entire MBSS range, which is widely considered necessary for modern devices.

The collaborating among these AP nodes in the MBSS network ensures that the STA in the network can be seamlessly connected to any AP node, which dispense with the need to re-establish a connection, thereby improving the security of user data and significantly reducing the latency. Therefore, seamless roaming of Augmented Reality (AR)/Virtual Reality (VR) with large amounts of data becomes possible. Clock synchronization is an important service that can be used for controlling and monitoring MBSS activities in these AP nodes and the STA. Many 802.11s MAC services also depend on synchronization. For example, the APs can synchronize wireless nodes/stations (STA) to share the same time. It should be noted that to some extent, the APs and the STA can serve as peer-to-peer network entities. This can achieve conflict-free and time-coordinated communications through wireless channels. At present, the scalability of a TSF in dense networks has been studied. The TSF always maintains a clock counter in a manner of using the latest beacon timestamp. This is similar to the IBSS (namely, 802.11 ad-hoc), so the fastest node will become a dominant node in the MBSS, resulting in a large number of conflicts and severely reducing the performance of the MBSS network.

A Mesh STA shall initialize and update its TSF timer according to an active synchronization method for the MBSS. Within an extensible synchronization framework, this framework is allowed to integrate other useful synchronization methods into the MBSS to meet special application requirements. Although there are some existing synchronization methods, an effective and sound mechanism is still needed by a mesh STA.

Traditionally, in the MBSS, a TSF counter with a micro-second resolution $\mu$s has been used for synchronizing STAs to an AP. The AP transmits its TSF timer value inside a beacon and probe response frame, and the STAs sets their own TSF timers to that of the AP minus delay corrections, i.e. synchronization by offset adjustment without rate correction. During each beacon period, each node tries to send out a beacon frame time-stamped with its own TSF counter value (namely, a TSF timer value) at the instant of transmission. When one node receives a beacon from another node, if the timestamp of the received beacon is large, the node updates its local TSF counter with the timestamp of the received beacon. If there is a beacon being pending, the transmission of the own beacon of the node is suppressed within the current beacon period. According to the 802.11 specification, at preset, "The AP shall initialize its TSF timer independently of any simultaneously started APs in an effort to minimize the synchronization of the TSF timers of multiple APs. A receiving STA shall always accept the timing information in Beacon frames sent from the AP servicing its BSS. If a STA's TSF timer is different from the timestamp in the received Beacon frame, the receiving STA shall set its local TSF timer to the received timestamp value".

However, because the fastest node does not always have the opportunity to transmit its beacon frame within each beacon interval, and even worse, nodes with faster clocks are not preferentially considered, when the size of the MBSS network increases, the probability that the fastest node can propagate its beacon frame to every other node in the network decreases.

In summary, the root cause for clock synchronization loss is that the nodes with the faster clocks cannot always successfully send out the beacon frames carrying clock synchronization information. Specific causes can include: Firstly, as the number of nodes in a collision domain increases, the probability that the nodes with the fastest clocks in the collision domain always win and successfully send out the beacon frames in a channel access competition decreases. This is because each node in the collision domain competes on an equal footing. Within each beacon period, there will be only one node in each collision domain successfully sends out its beacon. Secondly, if nodes with slower clocks send out the beacon frames earlier, the trasmission of the beacon frames on the nodes with the faster clocks may be possibly suppressed by the beacon frames sent by the nodes with the slower clocks.

At present, there is no solution that thoroughly and effectively solves the problem of synchronization of multiple APs/STAs for the MBSS network. In view of this, the embodiments of the present disclosure provide a technical solution for timing synchronization.

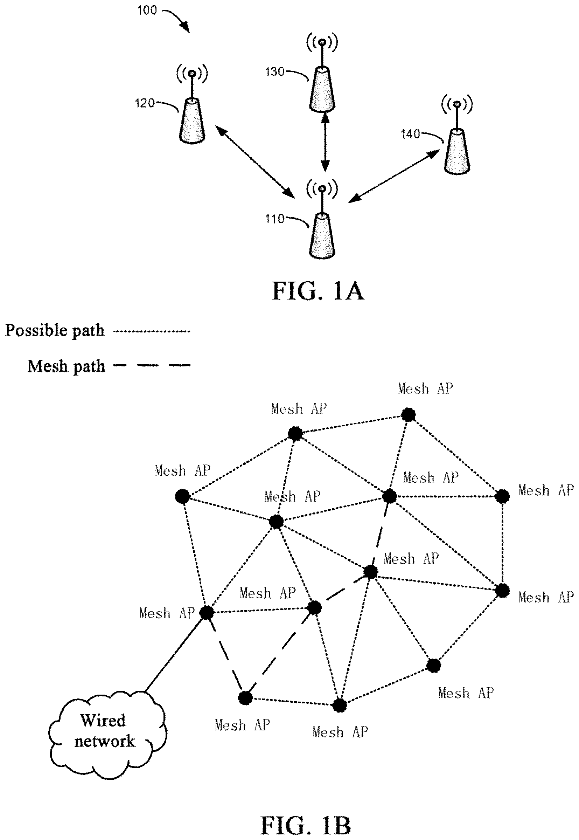

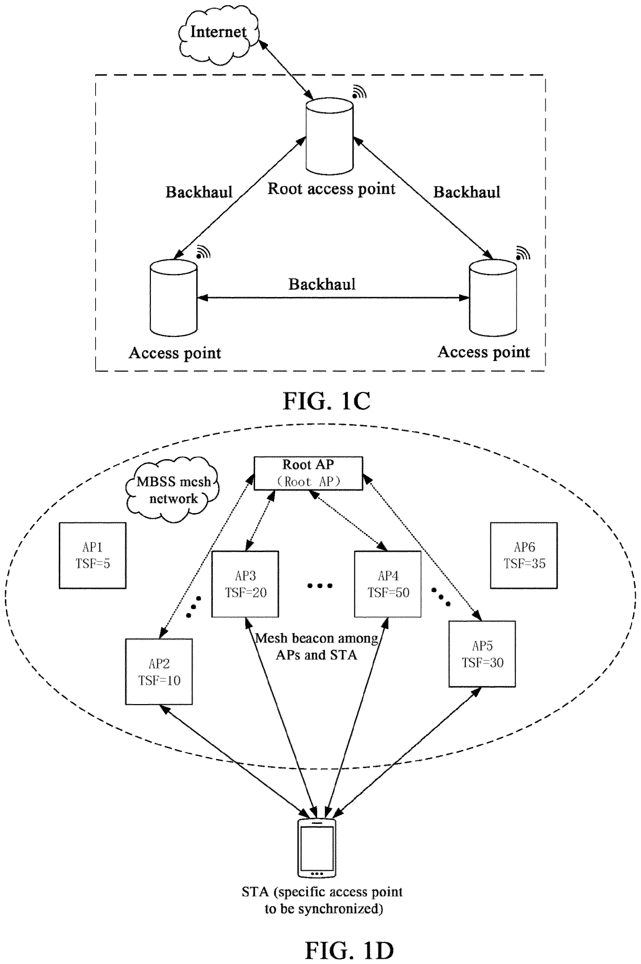

FIG 1A illustrates a block diagram of an example communication system in which the embodiments of the present disclosure may be implemented. As shown in FIG 1A, the communication system 100 includes a plurality of communication devices, such as communication devices 110, 120, 130, and 140. The plurality of communication devices can communicate directly or indirectly with each other. For example, the communication device 110 can communicate with the plurality of other communication devices. According to the example in FIG 1D, the communication device 110 can communicate with the communication devices 120, 130, 140. In some embodiments, communication may include transmitting or receiving control information. In some embodiments, the communication device 110 can be referred to as a first communication device 110. The first communication device 110 can transmit control information to the plurality of other communication devices (such as one or more of the communication devices 120, 130, and 140), so that the plurality of other communication devices can receive the control information transmitted by the first communication device 110. It should be noted that the number of the communication devices in the embodiments of the present disclosure is not limited to the above example.

FIG 1B illustrates a schematic diagram of a basic mesh topological structure according to some embodiments of the present disclosure. As shown in FIG 1B, an MBSS includes a plurality of Mesh APs, where dashed lines represent possible communication paths between the Mesh APs, and solid lines represent Mesh paths of some Mesh APs.

FIG 1C illustrates a schematic diagram of backhaul transmission of a mesh network according to some embodiments of the present disclosure. As shown in FIG 1C, three APs are taken as an example, showing a process of backhaul transmission, including backhaul transmissions between a root access point and other access points, as well as between other access points.

FIG 1D illustrates a schematic diagram of time synchronization in an MBSS network according to some embodiments of the present disclosure. The MBSS network shown in FIG 1D includes several APs (for example, AP1 to AP6), a Root AP, and an STA, where the Root AP is a root access point, or referred to as root AP, which can be a specific example of the first communication device 110. Each of the several APs can be referred to as non-root AP, which can be a specific example of one of the communication devices 120, 130, and 140. The STA is a specific AP that is synchronized with other APs in the MBSS, and may be be a non-root AP. In other words, in some embodiments, a synchronized non-root AP may be referred to as the STA. As shown in FIG 1D, TSF values of AP1 to AP6 are 5, 10, 20, 50, 30, and 35, respectively. The figure shows communication relationships between the Root AP and AP2 to AP5, as well as communication relationships between AP2 to AP5 and the STA, so that the clock of the STA is ultimately synchronized as the fastest clock in the MBSS network.

A behavior of the root AP has not been defined in IEEE 802.11. In the solution of the embodiments of the present disclosure, the definition of the behavior of the root AP can be summarized as follows:

1) The root AP determines a sending beacon priority from non-root APs based on the pre-defined probabilistic control mechanism and non-root APs' TSFs. The predefined p probabilistic control mechanism is for calculating the probability that the beacons transmitted successfully within several beacon intervals of a single AP.

2) The root AP may transmit buffer status information to non-root APs to indicate whether to adopt the non-root AP synchronization scheme and if non-full buffer, send the control/command information based on probabilistic control mechanism.

3) The root AP receives TSF values from the non-root APs.

4) The probabilistic control mechanism can mute low-priority access points at a current beacon interval, that is, make these access points not transmit beacons at the current beacon interval, thereby avoiding beacon collision with high-priority access points. Additionally, or alternatively, the probabilistic control mechanism can change an individual beacon interval for each non-root AP by introducing a beacon offset based on a standard beacon interval. Additionally, or alternatively, the probabilistic control mechanism can configure TSF_stepping_value. The TSF_stepping_value can be configured as the fastest clock among existing TSF clocks of the non-root access points, which is sufficient to ensure that a new beacon's timestamp is larger than the TSF counter values (i.e. TSF timer values) of all the APs in a typical MBSS network.

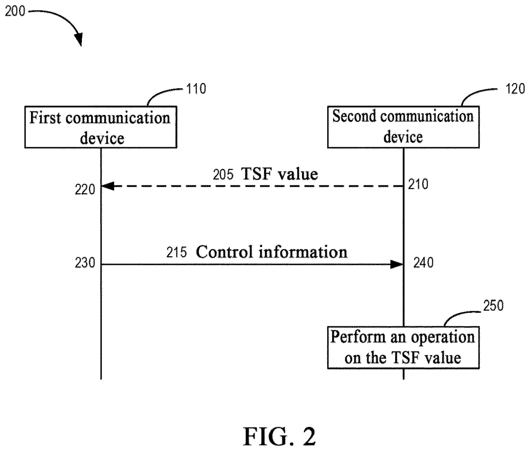

FIG 2 illustrates a flowchart of an interaction between communication devices according to some embodiments of the present disclosure. As shown in FIG 2, in flow 200, at a first communication device 110, a plurality of TSF timer values are received from a plurality of communication devices. Each communication device corresponds to one TSF timer value. In some embodiments, referring to FIG 1A, by way of example, the communication device 120 among the communication devices 120, 130, and 140 is a second communication device 120. The plurality of communication devices may include the second communication device 120. FIG 2 exemplarily shows a case where the first communication device 110 receives (220) a TSF timer value 205 corresponding to the second communication device 120 from the second communication device 120. It can be understood that similarly, the first communication device 110 can also receive the TSF timer values corresponding to the corresponding communication devices from other communication devices among the plurality of communication devices except the second communication device 120.

The first communication device 110 transmits (230) control information 215 to at least one communication device among the plurality of communication devices based on the plurality of TSF timer values, wherein the control information 215 is for controlling an operation of the at least one communication device on at least one TSF timer value. Correspondingly, at the second communication device 120, the control information 215 is received (240) from the first communication device 110, and the control information 215 received by the second communication device 120 is for controlling an operation of the second communication device 120 on the TSF timer values. The second communication device 120 can perform (250), based on the control information 215, the operation on the TSF timer value 205 corresponding to the second communication device 120.

In this way, the control information is transmitted based on the plurality of TSF timer values of the plurality of communication devices to control the communication devices to operate the respective TSF timer values, thereby ensuring timing synchronization between the communication devices.

In some embodiments, corresponding to the operation that the first communication device 110 receives (220) the TSF timer value 205 corresponding to the second communication device 120 from the second communication device 120, at the second communication device 120, the operation of transmitting (210) the TSF timer value 205 corresponding to the second communication device 120 can be performed correspondingly.

In some embodiments, a plurality of priorities of the plurality of communication devices are determined based on the plurality of TSF timer values, and the control information 215 is generated based on the plurality of priorities. Therefore, the operation of the communication devices on the TSF timer values can be controlled based on the priorities, so as to avoid clock synchronization loss.

In some embodiments, in order to determine the plurality of priorities, specifically, based on determining that the TSF timer value of the second communication device 120 among the plurality of communication devices is greater than, equal to, or less than a TSF timer value of a third communication device among the plurality of communication devices, it is determined that the priority of the second communication device 120 is higher than, equal to, or lower than the priority of the third communication device. The third communication device is a communication device that is different from the second communication device 120. In this way, the priorities corresponding to the transmission of beacon frames on nodes with faster clocks are high, thereby avoiding that the transmission of the beacon frames on the nodes with the faster clocks is suppressed by beacon frames transmitted by nodes with slower clocks.

In some embodiments, in a case that at least one priority of the at least one communication device is lower than the priorities of other communication devices among the plurality of communication devices, the control information 215 is for controlling the at least one communication device to skip transmitting the at least one TSF timer value within a predetermined time interval.

In some embodiments, in a case that at least one priority of the at least one communication device is lower than the priorities of other communication devices among the plurality of communication devices, the control information 215 is for controlling the at least one communication device to transmit the at least one TSF timer value within a time interval increased relative to a predetermined time interval.

In some embodiments, in a case that at least one priority of the at least one communication device is higher than the priorities of other communication devices among the plurality of communication devices, the control information 215 is for controlling the at least one communication device to transmit the at least one TSF timer value within a time interval decreased relative to a predetermined time interval.

In some embodiments, the aforementioned at least one communication device may be the plurality of aforementioned communication devices. The communication information 215 is for controlling the plurality of communication devices to adjust their respective TSF timer values into a common TSF timer value.

In some embodiments, the common TSF timer value may be greater than or equal to the maximum TSF timer value among the plurality of TSF timer values.

In some embodiments, the control information 215 is used for adjusting at least one probability that the at least one communication device transmits the at least one TSF timer value within the predetermined time interval. In some embodiments, the predetermined time interval may be the standard beacon interval for the communication devices to transmit the beacons, and the beacon frames for transmitting the beacons may be timestamped with the TSF timer values. In some other embodiments, the control information 215 is used for adjusting at least one TSF timer value of the at least one communication device. In still some other embodiments, the control information 215 is used for adjusting both of them (at least one probability and the at least one TSF timer value).

At the second communication device 120, in some embodiments, the operation is performed on the TSF timer values, which may include: transmitting the TSF timer values within a predetermined time interval is skipped. For example, in some embodiments, the operation of transmitting the TSF timer values within the predetermined time interval is muted, that is, the operation of transmitting is performed. In some other embodiments, the operation is performed on the TSF timer values, which includes: the TSF timer values are transmitted within a time interval increased relative to the predetermined time interval. In still some other embodiments, the operation is performed on the TSF timer values, which includes: the TSF timer values are transmitted within a time interval decreased relative to a predetermined time interval. In yet still some other embodiments, the operation performed on the TSF timer values may be one or a combination of more of the operations mentioned in the aforementioned embodiment. In some embodiments, increasing or decreasing the above time interval can be achieved through offsetting. For example, the time interval is decreased by subtracting an offset value from the predetermined time interval. For another example, the time interval is increased by adding another offset value to the predetermined time interval.

In some embodiments, the operation is performed on the TSF timer values, which may include: the TSF timer values are adjusted into a target TSF timer value indicated by the control information 215, and the target TSF timer value is transmitted within the predetermined time interval. In some embodiments, the target TSF timer value may be a globally configured value.

In some embodiments, the above target TSF timer value may be greater than or equal to the TSF timer value 205 of the second communication device 120.

The solution of the embodiments of the present disclosure will be further introduced below by taking a communication device being an AP as an example. For example, the first communication device 110 may specifically be a Root AP, and the plurality of communication devices mentioned above may specifically be APs. Compared to the Root AP, the APs serving as an example of the plurality of communication devices can also be referred to as non-root APs. The Root AP is an AP that plays a control role in the solution of the embodiments of the present disclosure. For example, the Root AP controls, by transmitting control information, an operation of at least one non-root AP on its TSF timer value, wherein each AP has a corresponding TSF timer value. An AP can transmit the TSF timer value to other APs by transmitting beacons.

In some embodiments, the above control can be achieved through a probability control method. For the probability control method, in some embodiments, adjustment of a beacon transmitting frequency of the AP can be specifically used. For example, the Root AP can control one or more of the APs to not transmit beacons within a predetermined time interval. In other words, the corresponding AP skips transmitting its TSF timer value within the predetermined time interval. Alternatively or alternatively, the Root AP can control a size of a time interval of one or more of the APs for transmitting beacons. In other words, the AP is controlled to transmit the TSF timer value within the time interval increased or decreased relative to the predetermined time interval. The predetermined time interval is an original transmitting time interval (namely, before the adjustment) of the AP or the standard beacon interval. By the above control, the AP that does not transmit beacons within the predetermined time interval or the AP that has the increased or decreased time interval for transmitting beacons may be an example of the second communication device 120.

In some other embodiments, the solution of the embodiments of the present disclosure may be implemented through a global configuration method for APs. For example, a global parameter TSF_stepping_value is introduced as the fastest clock value. This ensures that a new beacon's timestamp is larger than any of the existing timestamp, which is indirectly avoid the wrong TSF synchronization between an AP to be synchronized and an AP with a lower timestamp. The method of synchronously increasing TSF_stepping_value is effective, which allows the fastest AP to initiate a synchronization transaction through the entire network, thus eliminating the problem that faster nodes may not be able to send or relay their beacon frames and avoiding a decrease in the overall synchronization accuracy.

According to the solution of the embodiments of the present disclosure, a time and clock synchronization mechanism for an MBSS network is proposed, which can improve the synchronization accuracy between the APs and the STA in an Easy MBSS network and effectively synchronize the APs and the STA in the MBSS network. Designed AP or STA behaviors and related signaling well meet most applications.

As mentioned above, there are still some time synchronization problems, e.g. 1. A beacon collision probability increases as the number of access points in the MBSS increases. If beacons are not successfully transmitted within several consecutive beacon intervals, the STA may get out of synchronization. 2. All the stations in the single MBSS shall be synchronized to a common clock using the TSF, which keeps the timers for all STAs maintaining an updated TSF timer. At present, the TSF timer can be adjusted forwards only, but not backwards. More specifically, upon receiving a beacon, a STA adjusts its TSF timer based on the beacon timestamp if the value of the timestamp is later than the STA's TSF timer. However, when a beacon generated by a slow STA is received, a fast STA cannot be successfully relayed to all other nodes.

Continuing to refer to FIG 1D, an MBSS network composed of N access points is taken as an example, such as AP2, AP5, and STA are shown in FIG 1D. To simplify the analysis, it can be assumed that each access point can receive beacons transmitted by all the other access points. In a model of the solution of the embodiments of the present disclosure, a slot is used as a basic time unit. A beacon transmitting process starts after a plurality of virtual slots of each TBTT. Each AP sets a timer to a random number of slots selected from an interval of K virtual slot intervals starting from a beacon interval, and m is a size of a beacon window, (K<M). As an example, in the solution of the embodiments of the present disclosure, the TSFs of AP2, AP3, AP4, and AP5 are set to 10, 20, 50, and 30, respectively.

The revised version of 802.11s defines the concept of a mesh station. A mesh station is only a station that supports mesh facilities and can participate in a mesh cloud or an MBSS. The mesh facilities are just a group of features, functions, and framework formats that support grid operations. The term "mesh station" typically designates an access point, but nothing prevents a non-AP STA (client device) from being a mesh station. From this perspective, this case involves communications between APs. In the embodiments of the present disclosure, the STA is shown in FIG 1D to distinguish a specific AP from other APs of the MBSS.

The control of the operation performed on the TSF timer values is achieved through the probability control method in the embodiments of the present disclosure. Specifically, firstly, a probability of successfully transmitting beacons within several beacon intervals of a single AP can be calculated. More specifically, the probability for AP i (an ith AP) that exactly U beacon intervals are successfully transmitted out of V beacon intervals can be defined as:

$$P_i(U,V) = \binom{V}{U} p_i^U (1-p_i)^{V-U} = C_V^U p_i^U q_i^{V-U} = \frac{V!}{U!(V-U)!} p_i^U q_i^{V-U}, i=1,\ldots N \tag{1}$$

[0076] where, N is the AP number, and $p_i$ is a probability that the beacon information successfully delivered in current beacon interval of AP i.

Then, the beacon transmitting frequency can be adjusted through coordination of the Root AP according to relative clock values between neighbors. For example, continuing to refer to FIG 1D, faster nodes (such as AP4, AP5) have higher beacon transmitting priorities than slower nodes (AP2, AP3). The Root AP will determine the priorities of all the APs for transmitting beacons according to the relative TSFs. In the examples of the embodiments of the present disclosure, the Root AP will set the criteria: $p_2 \leq p_3 < p_5 \leq p_4$, instead of treating AP2 to AP5 equally, and divide the APs into two groups: AP2 and AP3 with low priorities, and AP4 and AP5 with high priorities. Further, the transmitting probabilities of the APs (AP4 and AP5) with large TSFs can be improved through the following embodiments I and II:

Embodiment I:

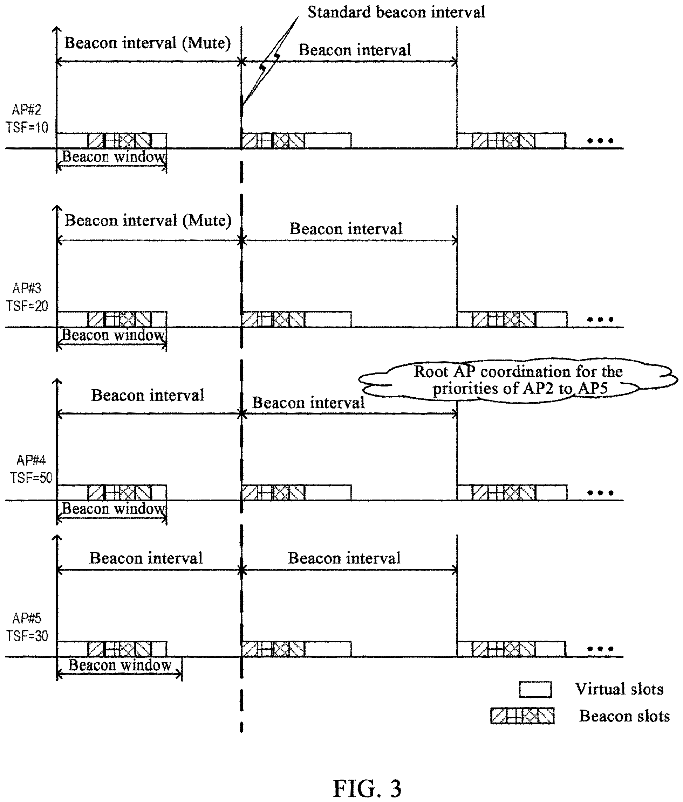

Referring to FIG 3, FIG 3 illustrates a schematic diagram of controlling an operation performed on TSF timer values in an MBSS network according to some embodiments of the present disclosure. Specifically, the Root AP can prevent AP2 and AP3 from transmitting beacons within the current beacon interval to avoid conflicts with beacons of AP4 and AP5. In the case mentioned in the embodiments shown in FIG 3, it is not necessary to change a single beacon interval of each AP.

Embodiment II:

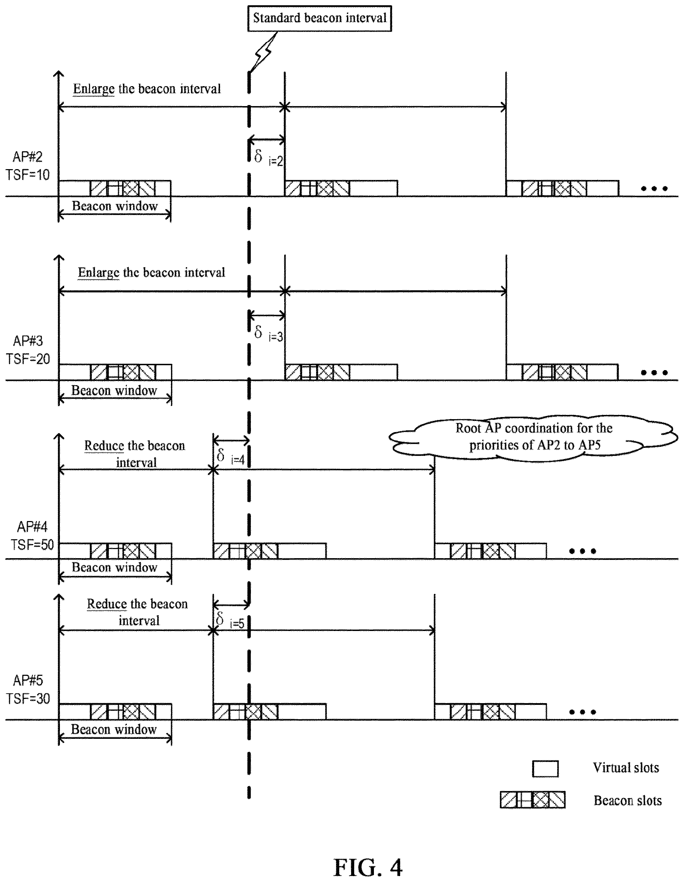

FIG 4 illustrates a schematic diagram of controlling an operation on TSF timer values in an MBSS network according to some other embodiments of the present disclosure. The Root AP can change the single beacon interval of each AP to dynamically increase the beacon transmitting probabilities of the APs with the large TSF values. By introducing a beacon offset based on the standard beacon interval (the predetermined time interval), defined as $\delta_i, i = 2,3,4,5$, to increase the beacon intervals of AP2 and AP3, or to decrease the beacon intervals of AP4 and AP5, as shown in FIG 4, a new beacon transmitting interval of AP2 is: standard beacon interval+ $\delta_2$; a new beacon transmitting interval of AP3 is: standard beacon interval+ $\delta_3$; a new beacon transmitting interval of AP4 is: standard beacon interval- $\delta_4$; and a new beacon transmitting interval of AP5 is: standard beacon interval- $\delta_5$. In some embodiments, the beacon intervals of the APs with the large TSF values can be decreased only, or the beacon intervals of the APs with the small TSF values can be increased only, or the beacon intervals of the APs with the large TSF values can be decreased, and the beacon intervals of the APs with the small TSF values can be increased. In fact, this implementation is equivalent to improving the parameter U defined in formula (1) above.

Achieving, through the global configuration method for APs, the control of the operation performed on the TSF timer value in the embodiments of the present disclosure will be specifically introduced in Embodiment III.

Embodiment III:

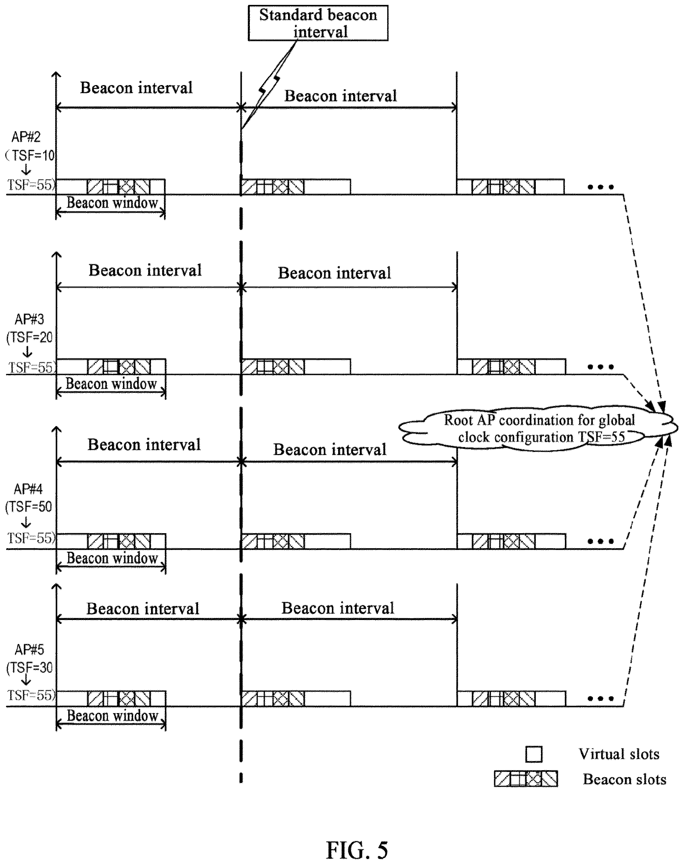

FIG 5 illustrates a schematic diagram of controlling an operation on TSF timer values in an MBSS network according to still some other embodiments of the present disclosure. The Root AP obtains TSF information of all the other APs, and then configures a stepping offset TSF named TSF_stepping_value. TSF_stepping_value can be configured as the fastest clock among existing TSF clocks. This is enough to ensure that a timestamp of a new beacon is greater than the TSF counter values of all the APs in the common MBSS network. In the example shown in FIG 5, TSF_stepping_value=55 (an example of a target TSF timer value). In this way, beacons always flow from nodes with fast clocks to nodes with slow clocks since the TSFs of all the APs (for example, the TSF values of AP2 to AP5 in FIG 5 are 10, 20, 50, and 30 respectively) are configured as a unified TSF with a relatively larger value (for example, TSF=55 in FIG 5), so there is no need to concern the beacon collision problem. If any AP wins the opportunity to transmit beacons in a competition, the AP can work well. In other words, FIG 5 is taken as an example. Any one of AP2 to AP5 that successfully transmits beacons (with the unified TSF value) can synchronize the clock to the unified TSF value. Any one of AP2 to AP5 in this example can serve as an example of the second communication device 120.

The embodiments of the present disclosure provide some important functions for the synchronization and MBSS beacons within the entire MBSS range, such as QoS across the entire MBSS range, efficient power saving, and synchronization accuracy, which meet the core requirements of the MBSS network.

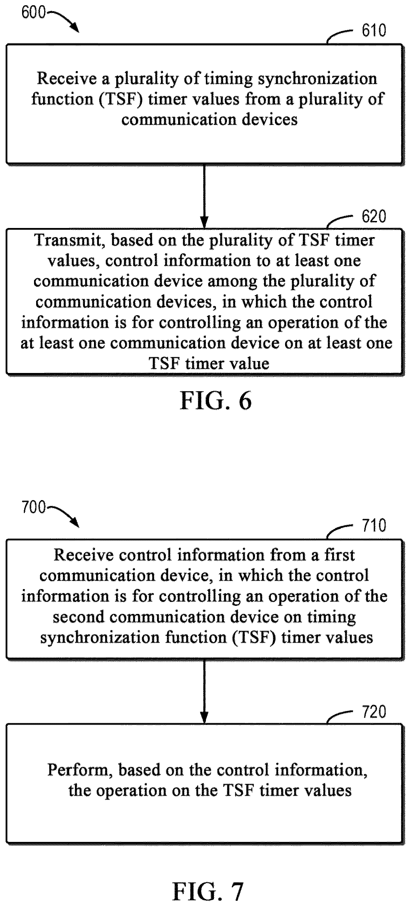

FIG 6 illustrates a schematic diagram of a flow performed by a first communication device 110 according to some embodiments of the present disclosure. As shown in FIG 6, in flow 600, at block 610, at the first communication device 110, a plurality of TSF timer values are received from a plurality of communication devices. At block 620, control information 215 is transmitted to at least one communication device among the plurality of communication devices based on the plurality of TSF timer values, in which the control information 215 is for controlling an operation of the at least one communication device on at least one TSF timer value.

In some embodiments, a plurality of priorities of the plurality of communication devices may be determined based on the plurality of TSF timer values, and the control information 215 is generated based on the plurality of priorities.

In some embodiments, in order to determine the plurality of priorities, specifically, based on determining that the TSF timer value of the second communication device 120 among the plurality of communication devices is greater than, equal to, or less than a TSF timer value of a third communication device among the plurality of communication devices, it is determined that the priority of the second communication device 120 is higher than, equal to, or lower than the priority of the third communication device.

In some embodiments, in a case that at least one priority of the at least one communication device is lower than the priorities of other communication devices among the plurality of communication devices, the control information 215 may be used for controlling the at least one communication device to skip transmitting the at least one TSF timer value within a predetermined time interval.

In some embodiments, in a case that at least one priority of the at least one communication device is lower than the priorities of other communication devices among the plurality of communication devices, the control information 215 may be used for controlling the at least one communication device to transmit the at least one TSF timer value within a time interval increased relative to a predetermined time interval.

In some embodiments, in a case that at least one priority of the at least one communication device is higher than the priorities of other communication devices among the plurality of communication devices, the control information 215 may be used for controlling the at least one communication device to transmit the at least one TSF timer value within a time interval decreased relative to a predetermined time interval.

In some embodiments, the aforementioned at least one communication device may be the plurality of above communication devices. The communication information 215 may be used for controlling the plurality of communication devices to adjust their respective TSF timer values into a common TSF timer value.

In some embodiments, the common TSF timer value may be greater than or equal to a maximum TSF timer value among the plurality of TSF timer values.

In some embodiments, the control information 215 can be used for adjusting at least one probability that the at least one communication device transmits the at least one TSF timer value within the predetermined time interval. In some other embodiments, the control information 215 can be used for adjusting at least one TSF timer value of the at least one communication device. In some other embodiments, the control information 215 can be used for adjusting both the at least one probability and the at least one TSF timer value.

FIG 7 illustrates a schematic diagram of a flow performed by a second communication device 120 according to some embodiments of the present disclosure. As shown in FIG 7, in flow 700, at block 710, at the second communication device 120, control information 215 is received from a first communication device 110, and the control information 215 is for controlling an operation of the second communication device 120 on TSF timer values. At block 720, based on the control information 215, the operation is performed on the TSF timer values.

In some embodiments, the operation is performed on the TSF timer values. Specifically, transmitting the TSF timer values within a predetermined time interval is skipped. In some other embodiments, the operation is performed on the TSF timer values. Specifically, the TSF timer values can be transmitted within a time interval increased relative to a predetermined time interval. In still some other embodiments, the operation is performed on the TSF timer values. Specifically, the TSF timer values can be transmitted within a time interval decreased relative to a predetermined time interval.

In some embodiments, the operation is performed on the TSF timer values. Specifically, the TSF timer values can be adjusted into a target TSF timer value indicated by the control information 215, and the target TSF timer value is transmitted within the predetermined time interval.

In some embodiments, the target TSF timer value may be greater than or equal to the TSF timer value of the second communication device 120.

In some example embodiments, an apparatus capable of performing the method 600 (for example, at the first communication device 110) may comprise means for performing the respective steps of the method 600. The means may be implemented in any suitable form. For example, the means may be implemented in a circuitry or software module.

In some embodiments, the apparatus includes means for receiving, from a plurality of communication devices, a plurality of TSF timer values, and means for transmitting, to at least one communication device among the plurality of communication devices and based on the plurality of TSF timer values, control information, in which the control information is for controlling an operation of the at least one communication device on at least one TSF timer value.

In some embodiments, the apparatus further includes means for determining a plurality of priorities of the plurality of communication devices based on the plurality of TSF timer values; and means for generating the control information based on the plurality of priorities.

In some embodiments, the means for determining the plurality of priorities includes means for, based on determining that the TSF timer value of the second communication device 120 among the plurality of communication devices is greater than, equal to, or less than a TSF timer value of a third communication device among the plurality of communication devices, determining that the priority of the second communication device 120 is higher than, equal to, or lower than the priority of the third communication device.

In some embodiments, in a case that at least one priority of the at least one communication device is lower than the priorities of other communication devices among the plurality of communication devices, the control information is for controlling the at least one communication device to skip transmitting the at least one TSF timer value within a predetermined time interval.

In some embodiments, in a case that at least one priority of the at least one communication device is lower than the priorities of other communication devices among the plurality of communication devices, the control information is for controlling the at least one communication device to transmit the at least one TSF timer value within a time interval increased relative to a predetermined time interval.

In some embodiments, in a case that at least one priority of the at least one communication device is higher than the priorities of other communication devices among the plurality of communication devices, the control information is for controlling the at least one communication device to transmit the at least one TSF timer value within a time interval decreased relative to a predetermined time interval.

In some embodiments, the at least one communication device is the plurality of communication devices, and the communication information is for controlling the plurality of communication devices to adjust their respective TSF timer values into a common TSF timer value.

In some embodiments, the common TSF timer value is greater than or equal to a maximum TSF timer value among the plurality of TSF timer values.

In some embodiments, the control information is used for adjusting at least one probability that the at least one communication device transmits the at least one TSF timer value within the predetermined time interval. Alternatively or additionally, the control information is used for adjusting the at least one TSF timer value of the at least one communication device.

In some embodiments, the apparatus further includes means for performing other steps in some embodiments of the method 600. In some embodiments, the means includes at least one processor and at least one memory storing computer program codes. The at least one memory and the computer program codes are configured to, with the at least one processor, cause the performance of the apparatus.

In some example embodiments, an apparatus capable of performing the method 700 (for example, at the second communication device 120) can include means for performing all the steps of the method 700. The means may be implemented in any suitable form. For example, the means may be implemented in a circuitry or software module.

In some embodiments, the apparatus can include means for receiving control information from a first communication device 110, in which the control information is for controlling an operation of the second communication device 120 on TSF timer values; and means for performing, based on the control information, the operation on the TSF timer values .

In some embodiments, the means for performing the operation on the TSF timer values includes: means for skipping transmitting the TSF timer values within a predetermined time interval; means for transmitting the TSF timer values within a time interval increased relative to the predetermined time interval; or means for transmitting the TSF timer values within a time interval decreased relative to the predetermined time interval.

In some embodiments, the means for performing the operation on the TSF timer values includes: means for adjusting the TSF timer values into a target TSF timer value indicated by the control information; and means for transmitting the target TSF timer value within the predetermined time interval.

In some embodiments, the target TSF timer value is greater than or equal to the TSF timer value of the second communication device 120.

In some embodiments, the apparatus further includes means for performing other operations in some embodiments of the method 700. In some embodiments, the means include at least one processor and at least one memory storing computer program codes. The at least one memory and the computer program codes are configured to, with the at least one processor, cause the performance of the apparatus.

Some embodiments of the present disclosure further provide a communication device, including: a processor; and a transceiver, coupled to the processor in a communication manner; and the processor is configured to enable the device to perform the method 600.

Some other embodiments of the present disclosure further provide a communication device, including: a processor; and a transceiver, coupled to the processor in a communication manner; and the processor is configured to enable the device to perform the method 700.

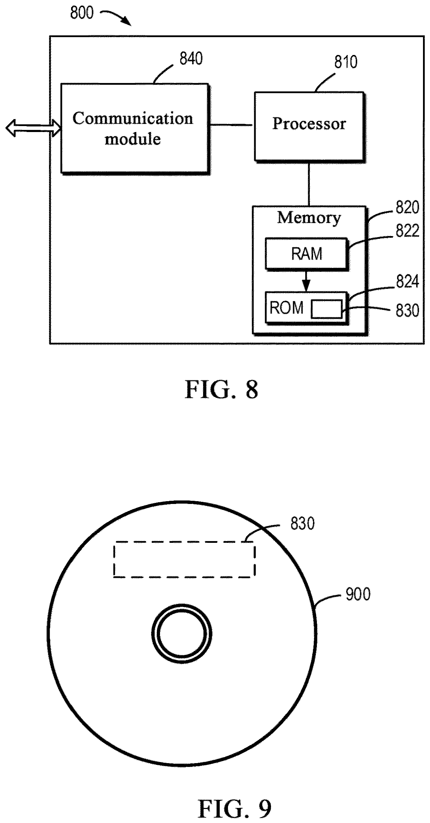

FIG 8 is a simplified block diagram of an electronic device 800 suitable for implementing the embodiments of the present disclosure. The device 800 can be provided to implement a communication device, such as the communication device 110 or the communication devices 120, 130, and 140 as shown in FIG 1A. As shown in the figure, the device 800 includes one or more processors 810. One or more memories 820 are coupled to the processors 810, and one or more communication modules 840 are coupled to the processors 810.

The communication modules 840 are configured for bidirectional communication. For example, the communication modules 840 may include a transmitter, a receiver, or a transceiver in the embodiments of the present disclosure. A communication interface can represent any interface necessary for communication with other network elements.

The processors 810 may be of any type suitable for a local technology network and may include, but not limited to, one or more of a general-purpose computer, a specialized computer, a microcontroller, a digital signal controller (DSP), and a controller-based multi-core controller architecture. The device 800 may have a plurality of processors, such as an application specific integrated circuit chip that is slaved in time to a clock which synchronizes the main processor.

The memories 820 may include one or more non-volatile memories and one or more volatile memories. Examples of the non-volatile memories include but are not limited to a read-only memory (ROM) 824, an erasable programmable read-only memory (EPROM), a flash memory, a hard disk drive, compact disc (CD), a digital video disc (DVD), and other magnetic and/or optical storage. Examples of the volatile memories include but are not limited to a random access memory (RAM) 822 and other volatile memories that will not persist during power outage.

Computer programs 830 include computer-executable instructions executed by an associated processor 810. The programs 830 can be stored in the ROM 820. The processor 810 can perform any appropriate actions and processing by loading the programs 830 into the RAM 822.

The embodiments of the present disclosure may be implemented with the help of the programs 830, so that the device 800 can execute any process of the present disclosure as discussed with reference to FIG 2 to FIG 7. The embodiments of the present disclosure can also be implemented through hardware or a combination of software and hardware.

In some embodiments, the programs 830 may be tangibly included in a computer-readable medium, and the computer-readable medium may be included in the device 800 (such as in the memory 820) or other storage devices accessible by the device 800. The programs 830 can be loaded from the computer-readable medium to the RAM 822 for being run. The computer-readable medium can include any type of tangible non-volatile memory, such as the ROM, the EPROM, the flash memory, the hard disk drive, the CD, the DVD, and the like.

FIG 9 illustrates an example of a computer-readable medium 900 in the form of CD or DVD. A program 830 is stored on the computer-readable medium.

Generally, the various embodiments the present disclosure may be implemented in hardware or dedicated circuits, software, logic, or any combination thereof. Some aspects may be implemented in hardware, while other aspects may be implemented in firmware or software that can be executed by controllers, microprocessors, or other computing devices. Although various aspects of the embodiments of the present disclosure are illustrated and described as block diagrams, flowcharts, or using some other diagrams, it should be understood that blocks, apparatuses, systems, techniques, or methods described herein may be implemented as, for example, non-limiting examples, hardware, software, firmware, dedicated circuits or logic, general-purpose hardware or controllers or other computing devices, or a combination thereof.

The present disclosure further provides at least one computer program product that is tangibly stored on a non-transitory computer-readable storage medium. The computer program product includes computer-executable instructions, such as instructions included in program modules, which are executed on a device on a real or virtual processor of a target to implement the methods 600 and 700 with reference to FIG 6 to FIG 7. Usually, the program modules include routines, programs, libraries, objects, classes, components, data structures, and the like that perform specific tasks or achieve specific abstract data types. In various embodiments, functions of the program modules can be combined or divided between the program modules as needed. Machine-executable instructions for the program modules can be executed locally or in distributed devices. In the distributed devices, the program modules can be located on both local and remote storage media.

The program codes for implementing the methods of the present disclosure may be written by using one or more programming languages. These computer program codes may be provided to a processor of a general-purpose computer, a special-purpose computer, or another programmable data processing apparatus, so that the program codes, when executed by the computer or the another programmable data processing apparatus, implement the functions/operations specified in the flowcharts and/or block diagrams. The program codes can be executed entirely on a computer, partially on a computer, as a standalone software package, partially on a computer and partially on a remote computer, or entirely on a remote computer or server.

In the context of the present disclosure, the computer program codes or related data may be carried by any appropriate carrier to enable devices, apparatuses, or processors to perform the various processing and operations described above. Examples of the carrier include signals, computer-readable media, and the like. Examples of the signals can include electrical signals, optical signals, radio signals, sound signals, or other forms of propagation signals, such as carrier waves and infrared signals.

The computer-readable medium can be any tangible medium that contains or stores programs used for or related to instruction execution systems, apparatuses, or devices. The computer-readable medium can be a computer-readable signal medium or a computer-readable storage medium. The computer-readable medium may include but is not limited to electronic, magnetic, optical, electromagnetic, infrared, or semiconductor systems, apparatuses, or devices, or any suitable combination thereof. More detailed examples of the computer-readable storage medium include electrical connections of one or more wires, a portable computer disk, a hard disk drive, a RAM, a ROM, an EPROM or flash memory, an optical storage device, a magnetic storage device, or any suitable combination thereof. The term "non-transitory," as used herein, is a limitation of the medium itself (i.e., tangible, not a signal) as opposed to a limitation on data storage persistency (e.g., RAM vs. ROM).

In addition, although the operations of the methods of the present disclosure are described in a specific order in the accompanying drawings, this does not require or imply that these operations need to be performed in this specific order, or that all the shown operations need to be performed to achieve desired results. On the contrary, the order of execution of the steps depicted in the flowcharts can be changed. Additionally or alternatively, some steps can be omitted; multiple steps can be combined into one step for execution; and/or a step can be decomposed into multiple steps for execution. It should also be noted that features and functions of two or more apparatuses of the present disclosure can be concretized in one apparatus. On the contrary, the features and functions of an apparatus described above can be further divided into multiple apparatuses for concretization.

Although several specific embodiments have been referred to describe the present disclosure, it should be understood that the present disclosure is not limited to the specific embodiments disclosed. The present disclosure aims to cover various modifications and equivalent arrangements included in the spirit and scope of the attached claims.

**Claims**

1. A first communication device (110), comprising:

    at least one processor; and
    at least one memory storing instructions that, when executed by the at least one processor, cause the first communication device at least to:

        receive (610), from a plurality of communication devices, a plurality of timing synchronization function, TSF, timer values; and
        transmit (620), to at least one communication device among the plurality of communication devices and based on the plurality of TSF timer values, control information, wherein the control information is for controlling an operation of the at least one communication device on at least one TSF timer value.

2. The first communication device (110) of claim 1, further comprising:

    determining, based on the plurality of TSF timer values, a plurality of priorities of the plurality of communication devices; and
    generating, based on the plurality of priorities, the control information.

3. The first communication device (110) of claim 2, wherein determining the plurality of priorities comprises:
    based on determining that a TSF timer value of a second communication device among the plurality of communication devices is greater than, equal to, or less than a TSF timer value of a third communication device among the plurality of communication devices, determining that the priority of the second communication device is higher than, equal to, or lower than the priority of the third communication device.

4. The first communication device (110) of claim 2 or 3, wherein
    in the event that at least one priority of the at least one communication device is lower than priorities of other communication devices among the plurality of communication devices, the control information is for controlling the at least one communication device to skip transmitting the at least one TSF timer value within a predetermined time interval.

5. The first communication device (110) of claim 2 or 3, wherein
    in the event that at least one priority of the at least one communication device is lower than priorities of other communication devices among the plurality of communication devices, the control information is for controlling the at least one communication device to transmit the at least one TSF timer value within a time interval increased relative to a predetermined time interval.

6. The first communication device (110) of claim 2 or 3, wherein

in the event that at least one priority of the at least one communication device is higher than priorities of other communication devices among the plurality of communication devices, the control information is for controlling the at least one communication device to transmit the at least one TSF timer value within a time interval decreased relative to a predetermined time interval.

7. The first communication device (110) of claim 1, wherein the at least one communication device is the plurality of communication devices, and wherein

the communication information is for controlling the plurality of communication devices to adjust their respective TSF timer values into a common TSF timer value, wherein for example
the common TSF timer value is greater than or equal to a maximum TSF timer value among the plurality of TSF timer values.

8. The first communication device (110) of any of claims 1 to 7, wherein the control information is for adjusting at least one of the following:

at least one probability that the at least one communication device transmits the at least one TSF timer value within a predetermined time interval; or
the at least one TSF timer value of the at least one communication device.

9. A second communication device (120), comprising:

at least one processor; and
at least one memory storing instructions that, when executed by the at least one processor, cause the second communication device at least to:

receive (710), from a first communication device (110), control information, wherein the control information is for controlling an operation of the second communication device on timing synchronization function, TSF, timer values; and
perform (720), based on the control information, the operation on the TSF timer values.

10. The second communication device (120) of claim 9, wherein performing the operation comprises:

skipping transmitting the TSF timer values within a predetermined time interval;
transmitting the TSF timer values within a time interval increased relative to the predetermined time interval; or
transmitting the TSF timer values within a time interval decreased relative to the predetermined time interval.

11. The second communication device (120) of claim 9, wherein performing the operation comprises:

adjusting the TSF timer values into a target TSF timer value as indicated by the control information; and
transmitting the target TSF timer value within a predetermined time interval, wherein for example
the target TSF timer value is greater than or equal to the TSF timer values of the second communication device.

12. A communication method, comprising:

receiving (610), at a first communication device (110) and from a plurality of communication devices, a plurality of timing synchronization function, TSF, timer values; and
transmitting (620), to at least one communication device among the plurality of communication devices and based on the plurality of TSF timer values, control information, wherein the control information is for controlling an operation of the at least one communication device on at least one TSF timer value.

13. A communication method, comprising:

receiving (710), at a second communication device (120) and from a first communication device (110), control information, wherein the control information is for controlling an operation of the second communication device on timing synchronization function, TSF, timer values; and
performing (720), based on the control information, the operation on the TSF timer values.

**14.** A communication apparatus, comprising:

means for receiving (610), at a first communication device (110) and from a plurality of communication devices, a plurality of timing synchronization function, TSF, timer values; and

means for transmitting (620), to at least one communication device among the plurality of communication devices and based on the plurality of TSF timer values, control information wherein the control information is for controlling an operation of the at least one communication device on at least one TSF timer value.

**15.** A communication apparatus, comprising:

means for receiving (710), at a second communication device (120) and from a first communication device (110), control information, wherein the control information is for controlling an operation of the second communication device on timing synchronization function, TSF, timer values; and

means for performing (720), based on the control information, the operation on the TSF timer values.

**16.** A computer-readable medium comprising instructions stored thereon, the instructions, when executed by at least one processing unit, cause the at least one processing unit to be configured to perform the method of any of claims 12 to 13.

FIG. 1A

FIG. 1B

**FIG. 1C**

STA (specific access point
to be synchronized)

**FIG. 1D**

200

110
First communication
device

120
Second communication
device

205 TSF value
220 ← ─ ─ ─ ─ ─ ─ ─ ─ ─ ─ ─ 210

215 Control information
230 ─────────────────────→ 240

250
Perform an operation
on the TSF value

FIG. 2

EP 4 451 754 A1

FIG. 3

Standard beacon interval

Enlarge the beacon interval

AP#2
TSF=10

$\delta_{i=2}$

Beacon window

Enlarge the beacon interval

AP#3
TSF=20

$\delta_{i=3}$

Beacon window

Root AP coordination for the priorities of AP2 to AP5

Reduce the beacon interval

$\delta_{i=4}$

AP#4
TSF=50

Beacon window

Reduce the beacon interval

$\delta_{i=5}$

AP#5
TSF=30

Beacon window

☐ Virtual slots

▨ Beacon slots

FIG. 4

Standard beacon
interval

Beacon interval | Beacon interval

AP#2
(TSF=10
↓
TSF=55)

Beacon window

Beacon interval | Beacon interval

AP#3
(TSF=20
↓
TSF=55)

Beacon window

Root AP coordination for global
clock configuration TSF=55

Beacon interval | Beacon interval

AP#4
(TSF=50
↓
TSF=55)

Beacon window

Beacon interval | Beacon interval

AP#5
(TSF=30
↓
TSF=55)

Beacon window

☐ Virtual slots

▨ Beacon slots

FIG. 5

600 ⟋

┌─────────────────────────────────────────┐ ⟋ 610
│                                         │
│   Receive a plurality of timing synchronization │
│   function (TSF) timer values from a plurality of │
│   communication devices                 │
│                                         │
└─────────────────────────────────────────┘

┌─────────────────────────────────────────┐ ⟋ 620
│   Transmit, based on the plurality of TSF timer │
│   values, control information to at least one │
│   communication device among the plurality of │
│   communication devices, in which the control │
│   information is for controlling an operation of the │
│   at least one communication device on at least one │
│   TSF timer value                       │
└─────────────────────────────────────────┘

## FIG. 6

700 ⟋

┌─────────────────────────────────────────┐ ⟋ 710
│   Receive control information from a first │
│   communication device, in which the control │
│   information is for controlling an operation of the │
│   second communication device on timing │
│   synchronization function (TSF) timer values │
└─────────────────────────────────────────┘

┌─────────────────────────────────────────┐ ⟋ 720
│                                         │
│   Perform, based on the control information, │
│   the operation on the TSF timer values │
│                                         │
└─────────────────────────────────────────┘

## FIG. 7

800

840                    810

Communication          Processor
module

Memory                 820
                       822
RAM

                       824
ROM                    830

FIG. 8

830

900

FIG. 9

Europäisches
Patentamt

European
Patent Office

Office européen
des brevets

# EUROPEAN SEARCH REPORT

**Application Number**

EP 24 16 6229

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/014269 A1 (SHERMAN ITAY [IL] ET AL) 18 January 2007 (2007-01-18) | 1,7-9, 11-16 | INV. H04W56/00 |
| Y | * paragraph [0034] * <br> * paragraphs [0061] - [0068] * | 2,3,5,6, 10 | |
| A | * paragraph [0075] * <br> * paragraphs [0079] - [0083] * <br> * figure 8 * <br> - - - - - | 4 | |
| Y | US 8 942 201 B1 (DUVVURI SRINIVASA KUMAR [US] ET AL) 27 January 2015 (2015-01-27) | 2,3,5,6, 10 | |
| A | * column 10, lines 18-31 * <br> * table 1 * <br> - - - - - | 1,4,7-9, 11-16 | |
| A | HEMANT KUMAR PANDE ET AL: "A new clock synchronization algorithm for multi-hop wireless ad hoc networks", WIRELESS COMMUNICATION AND SENSOR NETWORKS (WCSN), 2010 SIXTH INTERNATIONAL CONFERENCE ON, IEEE, 15 December 2010 (2010-12-15), pages 1-5, XP031913885, DOI: 10.1109/WCSN.2010.5712309 ISBN: 978-1-4244-9731-7 * Section II * * Section III * <br> - - - - - | 1-16 | |

**TECHNICAL FIELDS SEARCHED (IPC)**

H04W

The present search report has been drawn up for all claims

| Place of search | Date of completion of the search | Examiner |
|---|---|---|
| The Hague | 27 August 2024 | Wijting, Carl |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 451 754 A1

**ANNEX TO THE EUROPEAN SEARCH REPORT
ON EUROPEAN PATENT APPLICATION NO.**

EP 24 16 6229

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2024

| Patent document cited in search report | Publication date | Patent family member(s) | Publication date |
|---|---|---|---|
| US 2007014269 A1 | 18-01-2007 | NONE | |
| US 8942201 B1 | 27-01-2015 | NONE | |

EPO FORM P0459

For more details about this annex : see Official Journal of the European Patent Office, No. 12/82

**EP 4 451 754 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202310313708